# FASCICULE DE BREVET EUROPEEN

(11) **EP 2 864 179 B1**
(45) Date de publication et mention de la délivrance du brevet: **13.09.2017**
(21) Numéro de dépôt: 13721637.0
(22) Date de dépôt: 30.04.2013
(51) Int. Cl.: B62D 1/26, B66F 9/00, E01B 25/28

(54) **Méthode et dispositifs de protection contre une perte de guidage d'un véhicule guidé**
METHODE UND VORRICHTUNGEN ZUM SCHUTZ GEGEN DEN LENKVERLUST EINES GELENKTEN FAHRZEUGS
Method and devices for protecting against a loss of steering in a guided vehicle

(30) Priorité: 20.06.2012 EP 12290202
(43) Date de publication de la demande: 29.04.2015
(73) Titulaire: Siemens S.A.S., 93527 Saint-Denis Cedex (FR)
(72) Inventeur: CONSOLI, Luciano, F-75015 Paris (FR)
(74) Mandataire: Maier, Daniel Oliver
(86) Numéro de dépôt international: PCT/EP2013/058952
(87) Numéro de publication internationale: WO 2013/189651

(56) Documents cités:
- FR-A1- 2 757 549
- FR-A1- 2 780 739
- US-B2- 7 228 803

## Description

La présente invention concerne une méthode et des dispositifs de protection contre une perte de guidage d'un véhicule guidé lors d'un déraillement et/ou déguidage dudit véhicule guidé, selon le préambule des revendications 1, 4, et 12.

Par « véhicule guidé », il est fait référence aux moyens de transport en commun tels que des bus, trolleybus, tramways, métros, trains ou unités de train, etc., mais aussi aux moyens de transport de charge tel que, par exemple, les ponts roulants, pour lesquels l'aspect sécuritaire est très important et pour lesquels le guidage est assuré en particulier par un unique rail disposé sur une voie, et communément appelé "rail de guidage". Le rail de guidage sert de guide à un organe de guidage qui prend généralement appui sur ledit rail de guidage et suit sa trajectoire au cours du déplacement du véhicule guidé. L'organe de guidage permet par exemple à un système de guidage de diriger un essieu directeur du véhicule selon la trajectoire définie par le rail de guidage de façon à ce que ledit véhicule ne quitte pas sa voie, ledit essieu étant par exemple pourvu de roues porteuses.

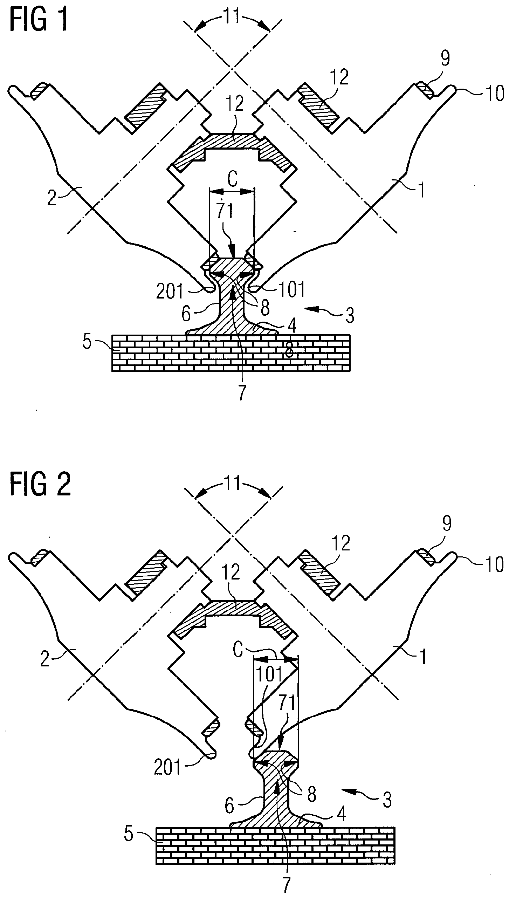

L'organe de guidage comprend généralement une paire de roues de guidage, aussi appelées galets de guidage, montées en V et pourvus de mentonnets permettant d'enserrer le rail de guidage. Un tel organe de guidage est par exemple décrit dans les documents US 7,228,803 B2, US 6,029,579 A1, US 6,363,860 B1. Les véhicules guidés par ce type d'organe de guidage fonctionnent selon le principe général suivant, décrit par référence à la Figure 1: ledit organe de guidage suit le rail de guidage 3 au moyen de la paire de galets 1, 2 en contact avec le rail de guidage 3 et commande au système de guidage une direction à imposer à un essieu directeur du véhicule. Un rail de guidage 3 conventionnel est en particulier composé d'une semelle 4 fixée au sol 5 et d'une âme 6 supportant un champignon 7 sur lequel les galets 1, 2 sont en appui via une bande de roulement 9. Chacun des galets 1, 2 d'une même paire de galets de guidage a ainsi sa bande de roulement 9 en contact avec une surface du champignon 7, appelée surface de roulement 8 et répartie symétriquement de part et d'autre de la partie supérieure du champignon 7. Lors du déplacement du véhicule, les galets 1, 2 sont en contact avec le champignon 7, et leurs mentonnets 10 respectifs entourent, de manière sans contact en mode nominal, ce dernier et s'approchent de l'âme 6 en dessous de celui-ci. Comme la distance entre les extrémités inférieures 201, 101 des deux mentonnets 10 entourant le champignon 7 est inférieure à la largeur C du champignon 7, une extraction du champignon 7 hors de l'emprise desdits galets 1, 2, ou encore hors de la zone comprise entre les bandes de roulement 9 et les mentonnets 10, n'est possible que si l'angle 11 de fixation des galets, i.e. l'angle correspondant au secteur formé par les axes de rotation de chacun des galets 1, 2 d'une paire de galets et qui est coupé par le plan de symétrie de la paire de galets en V, augmente et/ou si les mentonnets 10 et/ou les bords extérieurs du champignon 7 se déforment.

L'orientation correcte du véhicule est ainsi obtenue par couplage de la paire de galets de l'organe de guidage du système de guidage avec l'essieu directeur du véhicule. Si les galets enserrent correctement le rail de guidage, le véhicule suit la trajectoire décrite par le rail de guidage lors de son déplacement. Par contre, si les galets sortent de leur position normale de fonctionnement, par exemple, si le champignon du rail de guidage sort de la zone comprise entre les bandes de roulement et les mentonnets, alors le véhicule risque de quitter la trajectoire établie initialement par le rail de guidage. En effet, dès que les galets ne sont plus soumis à la direction imposée par le rail de guidage, ils peuvent partir vers la droite ou la gauche du rail de guidage, déviant ainsi le véhicule de la trajectoire prévue. Le scénario en question est défini comme une perte de guidage ou simplement déguidage du véhicule. En d'autres termes, le positionnement correct des galets est une condition nécessaire pour garantir la direction correcte du véhicule.

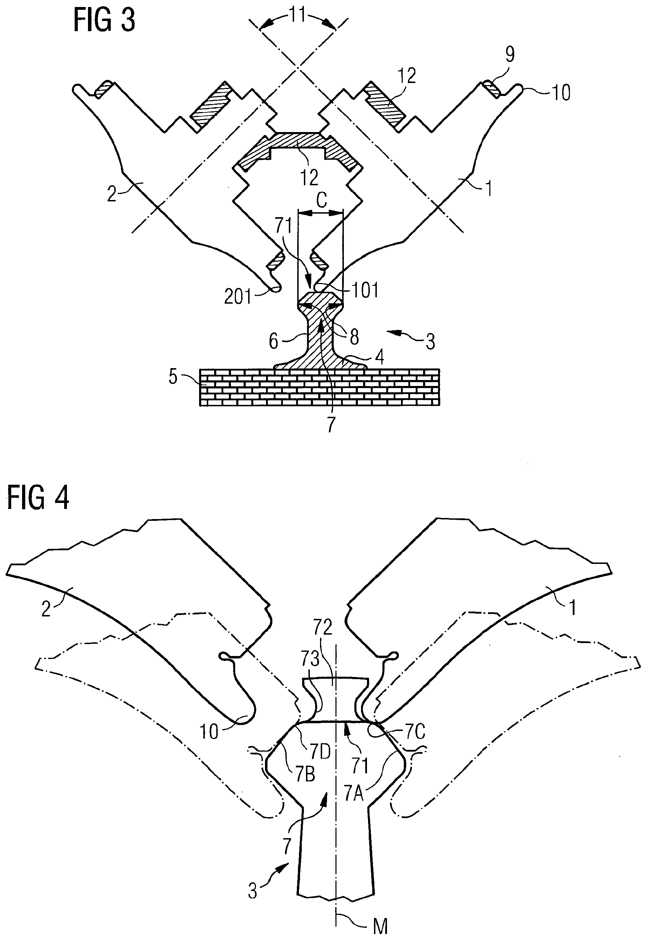

Bien qu'improbable, l'extraction du champignon hors de l'emprise des galets est possible. C'est le cas par exemple lorsque un effort vertical d'arrachement dirigé vers le haut est appliqué sur les galets ou sur une base de fixation des galets de façon à ce qu'une déformation des pièces (mentonnet et/ou champignon et/ou axe des galets) fasse que la distance entre les mentonnets dépasse la largeur du champignon. Dans ce cas, les galets n'enserrent plus le rail de guidage et peuvent se positionner soit à côté de ce dernier, ainsi que présenté en Figure 2, soit sur le rail de guidage, comme illustré par la Figure 3. Les références utilisées en Figure 1 sont reprises pour les Figures 2 et 3. En position sur le rail de guidage, le véhicule peut encore être guidé même si l'organe de guidage n'enserre plus le rail de guidage. Par contre, si les galets de guidage se trouvent positionnés à côté du rail de guidage, un braquage des roues porteuses peut faire sortir le véhicule guidé de sa trajectoire initialement prévue, ce qui peut avoir des conséquences néfastes pour l'exploitation du véhicule et du réseau auquel il appartient, ainsi que pour la sécurité des passagers et du personnel embarqué.

Ainsi, les systèmes de guidage actuels des véhicules guidés ne permettent pas d'assurer un maintien de la trajectoire dudit véhicule guidé lors d'un déraillement. Un objectif de la présente invention est de proposer un dispositif simple, sûr, fiable, et économiquement avantageux, de protection contre une perte de guidage d'un véhicule guidé lors d'un déraillement, qui soit apte à préserver le guidage dudit véhicule guidé sur l'intégralité d'un tracé de voie suivie par le véhicule guidé, notamment aussi bien en zone de croisement de voie qu'en voie courante. La présente invention a également pour but d'empêcher de manière rapide et fiable que le système de guidage d'un véhicule guidé puisse garder son pouvoir de braquage au moyen des bielles de direction en cas de perte de guidage et/ou de déraillement.

FR 2 780 739 divulgue le préambule de la revendication 4. FR 2 757 549 divulgue un rail de guidage profilé pour véhicule avec deux galets de guidage, sans mentonnet.

Afin de parvenir à ces objectifs, une méthode et des dispositifs sont proposés par le contenu des revendications 1, 4 et 12.

Un ensemble de sous-revendications présente également des avantages de l'invention.

La présente invention se rapporte à un dispositif de protection contre une perte de guidage d'un véhicule guidé équipé d'un organe de guidage comprenant une paire de galets de guidage montés en V, respectivement un premier galet et un second galet, destinés à prendre respectivement appui sur une première et une seconde surface de roulement d'un rail de guidage destiné au guidage dudit véhicule guidé, ladite première et ladite seconde surface de roulement étant situées de part et d'autre d'un plan médian longitudinal dudit rail de guidage, en particulier sur le champignon dudit rail de guidage, chacun des galets étant pourvu d'un mentonnet, lesdits mentonnets permettant d'enserrer librement le rail de guidage, notamment son champignon, ledit dispositif de protection comprenant:
- un profilé de hauteur h > 0 s'étendant longitudinalement, configuré pour être fixé selon sa longueur sur au moins une partie dudit rail de guidage, entre ladite première et ladite seconde surface de roulement, ledit profilé ayant une section, et notamment des caractéristiques mécaniques, convenant pour un guidage de l'organe de guidage lors d'un déraillement ou perte de guidage dudit organe de guidage lorsque ledit profilé est fixé à ladite partie du rail de guidage, ladite section ayant une géométrie apte à maintenir le mentonnet du premier galet du côté du plan médian comprenant la surface de roulement dudit premier galet et le mentonnet du second galet du côté du plan médian comprenant la surface de roulement dudit second galet lors d'un déraillement ou d'une perte de guidage dudit véhicule guidé, notamment en contraignant le mentonnet de l'un ou l'autre desdits galets à prendre appui sur le rail de guidage contre une troisième ou respectivement quatrième surface de roulement positionnées respectivement de part et d'autre dudit plan médian, i.e. de part et d'autre dudit profilé, et délimitées chacune par un côté dudit profilé lorsque ledit profilé est fixé à ladite partie du rail de guidage;
- un moyen de fixation, par exemple par un système de visserie ou au moyen de soudures, dudit profilé sur ledit rail de guidage, en particulier sur le champignon dudit rail de guidage.

La présente invention concerne également un rail de guidage adapté au guidage d'un véhicule guidé équipé d'un organe de guidage comprenant une paire de galets de guidage montés en V, respectivement un premier galet et un second galet, destinés à prendre respectivement appui sur une première et une seconde surface de roulement dudit rail de guidage, ladite première et ladite seconde surface de roulement étant situées de part et d'autre d'un plan médian longitudinal dudit rail de guidage, notamment sur le champignon dudit rail de guidage, chacun des galets étant pourvu d'un mentonnet, lesdits mentonnets permettant d'enserrer librement le rail de guidage, notamment son champignon, ledit rail de guidage étant caractérisé en ce qu'il comprend entre ladite première et ladite seconde surface de roulement, en particulier sur une face supérieure de son champignon, un profilé de hauteur h > 0 s'étendant longitudinalement sur ledit rail de guidage, notamment sur son champignon, sur au moins une partie dudit rail de guidage, ledit profilé convenant pour un guidage de l'organe de guidage lors d'un déraillement ou perte de guidage dudit organe de guidage, sa section ayant une géométrie apte à contraindre le mentonnet du premier galet à rester du côté du plan médian comprenant la surface de roulement dudit premier galet et le mentonnet du second galet du côté du plan médian comprenant la surface de roulement dudit second galet, notamment lors d'un déraillement ou d'une perte de guidage dudit véhicule guidé. En particulier, la géométrie de la section du profilé est apte à contraindre le mentonnet de l'un ou l'autre desdits galets à prendre appui sur le rail de guidage contre une troisième ou respectivement quatrième surface de roulement positionnées respectivement de part et d'autre dudit plan médian, i.e. de part et d'autre dudit profilé, et délimitées chacune par un côté dudit profilé. A cette fin, l'homme du métier saura dimensionner ledit profilé afin qu'un mentonnet d'un galet soit en contact ou non avec le rail lors d'un déraillement ou d'une perte de guidage dudit véhicule guidé.

Finalement, la présente invention se rapporte également à une méthode de protection contre une perte de guidage d'un véhicule guidé équipé d'un organe de guidage comprenant une paire de galets de guidage montés en V, respectivement un premier galet et un second galet, destinés à prendre respectivement appui sur une première et une seconde surface de roulement d'un rail de guidage servant au guidage dudit véhicule guidé, ladite première et ladite seconde surface de roulement étant situées de part et d'autre d'un plan médian longitudinal dudit rail de guidage, notamment sur le champignon dudit rail de guidage, chacun des galets étant pourvu d'un mentonnet, lesdits mentonnets permettant d'enserrer librement le rail de guidage, notamment son champignon, ladite méthode de protection comprenant une fixation, sur ledit rail de guidage, entre ladite première et ladite seconde surface de roulement, notamment au sommet dudit champignon, d'un profilé de hauteur h > 0 s'étendant longitudinalement sur une partie dudit rail de guidage, ledit profilé convenant pour un guidage de l'organe de guidage lors d'un déraillement ou perte de guidage dudit organe de guidage, en étant apte à contraindre le mentonnet du premier galet à rester du côté du plan médian comprenant la surface de roulement dudit premier galet et le mentonnet du second galet du côté du plan médian comprenant la surface de roulement dudit second galet, notamment en contraignant le mentonnet de l'un ou l'autre desdits galets à prendre appui sur le rail de guidage contre une troisième ou respectivement quatrième surface de roulement positionnées respectivement de part et d'autre dudit plan médian, i.e. de part et d'autre dudit profilé, et délimitées chacune par un côté dudit profilé.

Avantageusement, le dispositif de protection contre une perte de guidage, le rail de guidage et la méthode de protection contre une perte de guidage selon l'invention permettent de maintenir la trajectoire dudit véhicule guidé lors d'une perte de guidage ou un déraillement en imposant à au moins un des mentonnets de l'organe de guidage, au moyen dudit profilé, la trajectoire décrite par le rail de guidage, par exemple jusqu'à l'arrêt du véhicule guidé, ou encore le long de la partie du rail de guidage comprenant ledit profilé. Ledit profilé peut en particulier équiper un rail de guidage sur toute sa longueur, ou uniquement certaines parties longitudinales de rail de guidage, comme par exemple les parties de rail de guidage se trouvant dans des zones de croisements de rails.

Préférentiellement, pour au moins une extrémité dudit profilé, la hauteur h dudit profilé varie sur une longueur X d'une valeur minimale h ≅ 0 en extrémité dudit profilé à une valeur nominale h = h1 supérieure à ladite valeur minimale, de sorte que pour un profilé de longueur L, sa hauteur croît de 0 à h1 sur une longueur X < L à au moins une de ses extrémité, puis est par exemple soit maintenue constante h = h1 soit variable de X à L-X, et décroît de L-X à L en passant d'une hauteur h = h1 à une hauteur h ≅ 0. Préférentiellement, la hauteur h1 du profilé est typiquement de l'ordre de 15 à 30 mm et la longueur X de l'ordre de 50 à 100 cm.

De manière préférentielle, ledit profilé a une section comprenant une base destinée à être fixée sur ledit rail de guidage, deux côtés symétriques par rapport audit plan médian et destinés à contraindre le mentonnet de l'un ou l'autre desdits galets à prendre appui sur le rail de guidage et un côté supérieur. En particulier, ladite section dudit profilé est en forme de trapèze isocèle comprenant une grande base de longueur supérieure à une petite base, la petite base dudit trapèze isocèle étant destinée à être fixée audit rail de guidage, et les côtés non parallèles dudit trapèze isocèle ayant préférentiellement une forme courbée vers l'intérieur dudit trapèze isocèle. Avantageusement, une telle section permet un maintien efficace des mentonnets en appui sur le rail de guidage.

Ledit profilé est en particulier constitué d'un matériel apte à résister mécaniquement aux efforts produits par les mentonnets contre ledit profilé lors d'un guidage de l'organe de guidage par ledit profilé. En particulier, ledit profilé est en acier, ou fabriqué dans la même manière que ledit rail de guidage. Préférentiellement, ledit profilé est soudé audit rail de guidage ou peut comprendre des trous de fixation le rendant apte à être fixé audit rail de guidage par un système de visserie. Le rail de guidage selon l'invention, pourvu dudit profilé peut en particulier être directement obtenu par laminage.

Finalement, des exemples de réalisation et d'application sont fournis à l'aide de:
- Figure 1: paire de galets de guidage correctement enraillé en mode nominal sur un rail de guidage;
- Figure 2: positionnement à côté d'un rail de guidage d'une paire de galets de guidage lors d'un déraillement;
- Figure 3: positionnement sur un rail de guidage d'une paire de galets de guidage lors d'un déraillement;
- Figure 4: exemple de rail de guidage selon l'invention en vue de face;
- Figure 5: exemple de rail de guidage selon l'invention en vue latérale;
- Figure 6: exemple de positionnement d'un rail de guidage selon l'invention par rapport à la surface d'une voie;
- Figure 7: autre exemple de positionnement d'un rail de guidage selon l'invention par rapport à la surface d'une voie;
- Figure 8: exemples de réalisation d'un profilé selon l'invention.

Les Figures 1 à 3 présentent respectivement un enraillement correct d'une paire de galets 1, 2 sur un rail de guidage 3 conventionnel représentant le mode nominal de fonctionnement de la paire de galets 1, 2, un cas de déraillement de la paire de galets 1, 2 à côté dudit rail de guidage conventionnel 3, et un cas de déraillement de la paire de galets 1, 2 sur le rail de guidage 3, chaque galet étant monté sur une base de fixation 12 de l'organe de guidage. Le déraillement de la paire de galets 1, 2 à côté du rail de guidage 3 peut conduire à un braquage de l'organe de guidage susceptible de conduire à une perte de trajectoire pour le véhicule guidé.

Afin d'éviter un tel problème, la présente invention propose d'améliorer un rail de guidage 3 tel que décrit dans les Figures 1-3 en l'équipant d'un dispositif de protection selon l'invention tel que présenté en Figures 4 à 7. A cette fin, le champignon 7 du rail de guidage 3 des Figures 1-3 peut en particulier être équipé d'un profilé 72 fixable sur une face supérieure 71 dudit champignon 3 tel qu'illustré en Figure 4.

La Figure 4 présente un exemple d'un rail de guidage 3 selon l'invention. Ce rail de guidage 3 est adapté au guidage d'un véhicule guidé équipé d'un organe de guidage comprenant une paire de galets 1, 2, de guidage montés en V, respectivement un premier galet 1 et un second galet 2, destinés à prendre respectivement appui sur une première surface 7A et une seconde surface 7B de roulement dudit rail de guidage, ladite première et ladite seconde surface 7A, 7B de roulement étant situées de part et d'autre d'un plan médian M longitudinal dudit rail de guidage 3, et notamment sur le champignon 7 dudit rail de guidage 3, chacun des galets 1, 2 étant pourvu d'un mentonnet 10, lesdits mentonnets 10 permettant d'enserrer librement le rail de guidage 3, notamment son champignon 7, lorsque les galets 1, 2 sont positionnés en mode nominal, i.e. en mode d'enraillement correct tel que représenté en traits-tirés, ledit rail de guidage 3 étant caractérisé en ce qu'il comprend entre ladite première et ladite seconde surface 7A, 7B, de roulement, en particulier sur une face supérieure de son champignon 7, un profilé 72 de hauteur h > 0 s'étendant longitudinalement sur ledit rail de guidage 3, notamment sur son champignon 7, sur au moins une partie ou portion longitudinale dudit rail de guidage 3, ledit profilé 72 convenant pour un guidage de l'organe de guidage lors d'un déraillement ou perte de guidage dudit organe de guidage, schématisée en particulier par la position des galets 1, 2, en trait plein, sa section ayant une géométrie apte à contraindre le mentonnet 10 du premier galet 1 à rester du côté du plan médian M comprenant la surface de roulement 7A dudit premier galet 1 et le mentonnet 10 du second galet 2 à rester du côté du plan médian M comprenant la surface de roulement 7B dudit second galet 2, par exemple en contraignant le mentonnet 10 de l'un ou l'autre desdits galets 1, 2, à prendre appui sur le rail de guidage 3 contre une troisième surface 7C ou respectivement une quatrième surface 7D de roulement positionnées respectivement de part et d'autre dudit plan médian M, i.e. de part et d'autre dudit profilé 72, et délimitées chacune par un côté dudit profilé 72. Préférentiellement, ledit profilé 72 peut être fixé au moyen de soudures 73 audit champignon 7 dudit rail de guidage 3.

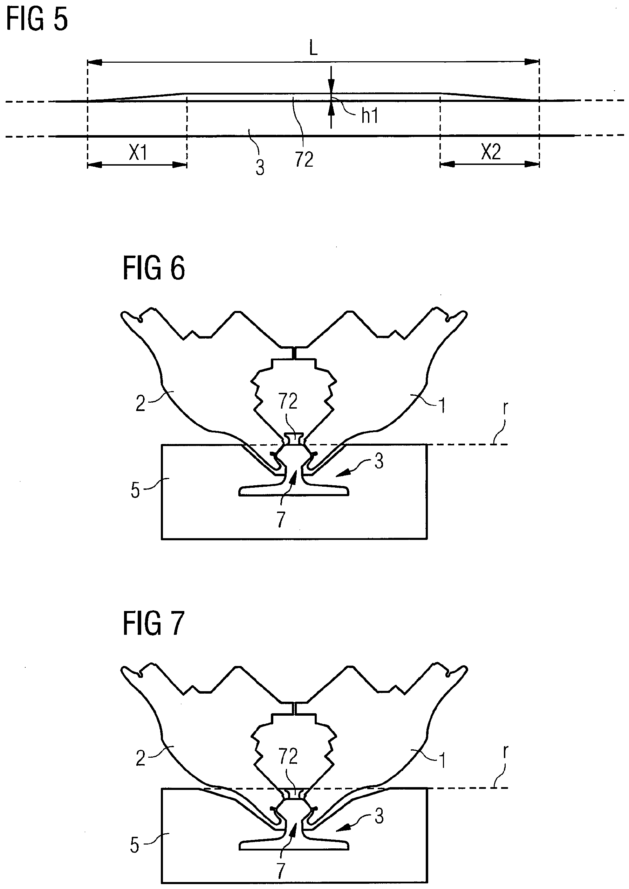

La Figure 5 présente une vue latérale d'un rail de guidage selon l'invention. Le rail de guidage 3 selon l'invention comprend sur une partie supérieure de son champignon ledit profilé 72. Ce dernier est en particulier caractérisé par une longueur L. La hauteur h dudit profilé est préférentiellement maintenue constante, h = h1, sur une distance L-(X1+X2) comprise entre les extrémités longitudinales dudit profilé. De cette façon, pour chaque extrémité longitudinale dudit profilé, la hauteur h dudit profilé peut préférentiellement varier d'un côté sur une longueur X = X1 d'une valeur minimale h ≅ 0 à une valeur nominale h = h1 supérieure à ladite valeur minimale, et de l'autre côté, sur une longueur X = X2 d'une valeur minimale h ≅ 0 à la valeur nominale h = h1 supérieure à ladite valeur minimale, de sorte que pour un profilé de longueur L, sa hauteur croît de 0 à h1 sur la longueur X1, est maintenue constante, i.e. h = h1 de X1 à L-X2, et décroît de h = h1 à h ≅ 0 de L-X2 à L.

Les Figures 6 et 7 présentent deux alternatives préférées de positionnement du rail de guidage 3 selon l'invention par rapport au niveau r de la surface de roulement du véhicule guidé. Selon une première alternative présentée en Figure 6, la partie supérieure du champignon 7 dudit rail de guidage 3 est au même niveau r que la surface de roulement du véhicule guidé et le profilé 72 selon l'invention dépasse de sa hauteur h au-dessus de ladite surface de roulement, tandis que selon la seconde alternative présentée en Figure 7, le sommet dudit profilé 72 est au niveau r de ladite surface de roulement. Dans chacune des deux alternatives, la semelle du rail de guidage 3 peut être fixée dans un socle 5 apte à entourer d'une manière libre de contact la partie des galets 1, 2, entourant le rail de guidage 3.

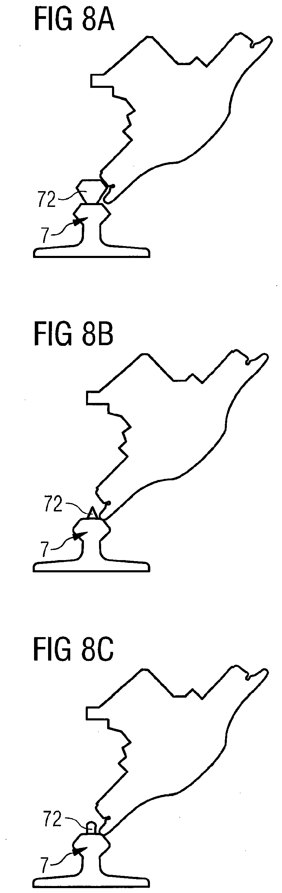

Finalement, la Figure 8 présente des exemples préférés de section dudit profilé 72 selon l'invention destinés à être fixé sur le champignon 7 d'un rail de guidage. La Figure 8A illustre par exemple un profilé 72 dont la section a une forme et des dimensions identiques ou voisines à la forme et aux dimensions dudit champignon 7, de sorte que lors d'un déraillement ou perte de guidage, le mentonnet est libre de contact avec le champignon 7 dudit rail de guidage. La Figure 8B présente par exemple un profilé 72 de section en forme de triangle isocèle dont la base est fixée sur la partie supérieure dudit champignon 7 du rail de guidage. La Figure 8C illustre schématiquement un profilé 72 dont la section est en particulier de forme quasi rectangulaire.

En résumé, le dispositif de protection, le rail de guidage et la méthode selon l'invention présentent les avantages suivants:
- un nombre réduit de composants susceptibles de causer une panne, impliquant notamment un faible coût de développement, de fabrication, de mise en place et de maintenance;
- une résistance aux environnements extérieurs contraignants liés aux véhicules guidés;
- une sécurisation et un maintien de la trajectoire en cas de déraillement de l'organe de guidage, que ce soit en voie courante ou en zone de croisement;
- ils n'ont pas d'interférence avec d'autres systèmes ou méthodes de protection, ce qui facilite une utilisation en redondance desdits autres systèmes ou méthodes de protection avec la présente invention;
- ils ne nécessitent pas une surveillance en sécurité.

## Revendications

1. Dispositif de protection contre une perte de guidage d'un véhicule guidé équipé d'un organe de guidage comprenant une paire de galets (1, 2) de guidage montés en V, respectivement un premier galet (1) et un second galet (2), destinés à prendre respectivement appui sur une première surface (7A) et une seconde surface (7B) de roulement d'un rail de guidage (3), ladite première et ladite seconde surface (7A, 7B) de roulement étant situées de part et d'autre d'un plan médian (M) longitudinal dudit rail de guidage (3), chacun des galets étant pourvu d'un mentonnet (10), lesdits mentonnets (10) permettant d'enserrer librement le rail de guidage (3), ledit dispositif de protection comprenant:
- un profilé (72) de hauteur h > 0 s'étendant longitudinalement, configuré pour être fixé selon sa longueur sur au moins une partie dudit rail de guidage (3), entre ladite première et ladite seconde surface de roulement (7A, 7B), ledit profilé (72) ayant une section convenant pour un guidage de l'organe de guidage lors d'un déraillement ou perte de guidage dudit organe de guidage lorsque ledit profilé (72) est fixé à ladite partie de rail de guidage (3), ladite section ayant une géométrie apte à maintenir le mentonnet (10) du premier galet (1) du côté du plan médian (M) comprenant la surface (7A) de roulement dudit premier galet (1) et le mentonnet (10) du second galet (2) du côté du plan médian (M) comprenant la surface (7B) de roulement dudit second galet (2);
- un moyen de fixation (73) dudit profilé sur ledit rail de guidage (3).

2. Dispositif de protection selon la revendication 1, **caractérisé en ce que** pour au moins une extrémité dudit profilé (72), la hauteur h dudit profilé (72) varie sur une longueur X d'une valeur minimale h ≅ 0 en extrémité dudit profilé (72) à une valeur nominale h = h1 supérieure à ladite valeur minimale.

3. Dispositif de protection selon une des revendications 1 ou 2, **caractérisé en ce que** ladite section dudit profilé (72) est en forme de trapèze isocèle, la petite base dudit trapèze isocèle étant destinée à être fixée audit rail de guidage.

4. Rail de guidage (3) adapté au guidage d'un véhicule guidé équipé d'un organe de guidage comprenant une paire de galets (1, 2) de guidage montés en V, respectivement un premier galet (1) et un second galet (2), destinés à prendre respectivement appui sur une première surface (7A) et une seconde surface (7B) de roulement dudit rail de guidage (3), ladite première et ladite seconde surface (7A, 7B) de roulement étant situées de part et d'autre d'un plan médian (M) longitudinal dudit rail de guidage (3), chacun des galets étant pourvu d'un mentonnet (10), lesdits mentonnets permettant d'enserrer librement le rail de guidage, ledit rail de guidage étant **caractérisé en ce qu'**il comprend entre ladite première et ladite seconde surface (7A, 7B) de roulement un profilé (72) de hauteur h > 0 s'étendant longitudinalement sur le rail de guidage (3), ledit profilé convenant pour un guidage de l'organe de guidage lors d'un déraillement ou perte de guidage dudit organe de guidage, en étant apte à maintenir le mentonnet (10) du premier galet (1) du côté du plan médian (M) comprenant la surface (7A) de roulement dudit premier galet (1) et le mentonnet (10) du second galet (2) du côté du plan médian (M) comprenant la surface (7B) de roulement dudit second galet (2) .

5. Rail de guidage (3) selon la revendication 4, **caractérisé en ce que** la géométrie de la section du profilé (72) est apte, lors dudit déraillement ou perte de guidage, à contraindre le mentonnet (10) de l'un ou l'autre desdits galets (1, 2) à prendre appui sur le rail de guidage (3) contre une troisième ou respectivement quatrième surface (7C, 7D) de roulement positionnées respectivement de part et d'autre dudit plan médian (M) et délimitées chacune par un côté dudit profilé (72).

6. Rail de guidage (3) selon la revendication 4 ou 5, **caractérisé en ce que** pour au moins une extrémité longitudinale dudit profilé (72), la hauteur h dudit profilé varie sur une longueur X d'une valeur minimale h ≅ 0 en extrémité dudit profilé (72) à une valeur nominale h = h1 supérieure à ladite valeur minimale.

7. Rail de guidage (3) selon la revendication 6, **caractérisé en ce que** ledit profilé (72) a une section comprenant une base destinée à être fixée sur ledit rail de guidage (3), deux côtés symétriques par rapport audit plan médian (M) et destinés à contraindre le mentonnet de l'un ou l'autre desdits galets à prendre appui sur le rail de guidage (3) et un côté supérieur.

8. Rail de guidage (3) selon la revendication 6, **caractérisé en ce que** ladite section a une forme de trapèze isocèle, la petite base dudit trapèze isocèle étant destinée à être fixée audit rail de guidage (3).

9. Rail de guidage (3) selon une des revendications 4 à 8 **caractérisé en ce que** ledit profilé (72) est soudé audit rail de guidage (3).

10. Rail de guidage (3) selon une des revendications 4 à 9, **caractérisé en ce que** le profilé (72) comprend des trous de fixation le rendant apte à être fixé au rail de guidage (3) par un système de visserie.

11. Rail de guidage (3) selon une des revendications 4 à 8, **caractérisé en ce qu'**il est obtenu par laminage.

12. Méthode de protection contre une perte de guidage d'un véhicule guidé équipé d'un organe de guidage comprenant une paire de galets (1, 2) de guidage montés en V, respectivement un premier galet (1) et un second galet (2), destinés à prendre respectivement appui sur une première et une seconde surface (7A, 7B) de roulement d'un rail de guidage (3) servant au guidage dudit véhicule guidé, ladite première et ladite seconde surface (7A, 7B) de roulement étant situées de part et d'autre d'un plan médian (M) longitudinal dudit rail de guidage (3), chacun des galets (1, 2) étant pourvu d'un mentonnet (10), lesdits mentonnets (10) permettant d'enserrer librement le rail de guidage (3), ladite méthode de protection comprenant une fixation sur ledit rail de guidage (3), entre ladite première et ladite seconde surface (7A, 7B) de roulement, d'un profilé (72) de hauteur h > 0 s'étendant longitudinalement sur une partie dudit rail de guidage (3), ledit profilé (72) convenant pour un guidage de l'organe de guidage lors d'un déraillement ou perte de guidage dudit organe de guidage en étant apte à maintenir le mentonnet (10) du premier galet (1) du côté du plan médian (M) comprenant la surface (7A) de roulement dudit premier galet (1) et le mentonnet (10) du second galet (2) du côté du plan (M) médian comprenant la surface (7B) de roulement dudit second galet (2).

13. Méthode de protection selon la revendication 12, **caractérisée en ce que** ledit profilé (72) est fixé par soudage (73) sur ledit rail de guidage (3).

14. Méthode de protection selon la revendication 12, **caractérisé en ce que** ledit profilé (72) est fixé par un système de visserie sur ledit rail de guidage (3).

15. Méthode de protection selon une des revendications 12 à 14, selon laquelle la partie dudit rail de guidage (3) sur laquelle est fixé ledit profilé (72) appartient à une zone de croisement de rails de guidage uniquement.

## Patentansprüche

1. Vorrichtung zum Schutz vor einem Führungsverlust eines geführten Fahrzeugs, das mit einem Führungsorgan ausgestattet ist, das ein Paar V-förmig angebrachter Führungsrollen (1, 2) umfasst, nämlich eine erste Rolle (1) und eine zweite Rolle (2), die dazu bestimmt sind, sich auf einer ersten Lauffläche (7A) bzw. einer zweiten Lauffläche (7B) einer Führungsschiene (3) abzustützen, wobei sich die erste und die zweite Lauffläche (7A, 7B) beiderseits einer Längsmittelebene (M) der Führungsschiene (3) befinden, wobei jede der Rollen mit einem Ansatz (10) versehen ist, wobei diese Ansätze (10) ermöglichen, die Führungsschiene (3) frei zu umschließen, wobei die Schutzvorrichtung umfasst:
- ein sich in Längsrichtung erstreckendes Profilteil (72) mit einer Höhe h > 0, das dafür ausgebildet ist, entlang seiner Länge auf wenigstens einem Teil der Führungsschiene (3) zwischen der ersten und der zweiten Lauffläche (7A, 7B) befestigt zu werden, wobei dieses Profilteil (72) einen Querschnitt aufweist, der für eine Führung des Führungsorgans bei einer Entgleisung oder einem Führungsverlust des Führungsorgans geeignet ist, wenn das Profilteil (72) an dem Teil der Führungsschiene (3) befestigt ist, wobei der Querschnitt eine Geometrie aufweist, die geeignet ist, den Ansatz (10) der ersten Rolle (1) auf der Seite der Mittelebene (M) zu halten, welche die Lauffläche (7A) der ersten Rolle (1) umfasst, und den Ansatz (10) der zweiten Rolle (2) auf der Seite der Mittelebene (M), welche die Lauffläche (7B) der zweiten Rolle (2) umfasst;
- ein Mittel zur Befestigung (73) des Profilteils auf der Führungsschiene (3).

2. Schutzvorrichtung nach Anspruch 1, **dadurch gekennzeichnet, dass** für wenigstens ein Ende des Profilteils (72) die Höhe h dieses Profilteils (72) auf einer Länge X von einem minimalen Wert h ≅ 0 am Ende des Profilteils (72) bis zu einem Nennwert h = h1, der größer als der minimale Wert ist, variiert.

3. Schutzvorrichtung nach einem der Ansprüche 1 oder 2,
**dadurch gekennzeichnet, dass** der Querschnitt des Profilteils (72) die Form eines gleichschenkligen Trapezes aufweist, wobei die kleine Grundseite dieses gleichschenkligen Trapezes dazu bestimmt ist, an der Führungsschiene befestigt zu werden.

4. Führungsschiene (3), welche für die Führung eines geführten Fahrzeugs ausgelegt ist, das mit einem Führungsorgan ausgestattet ist, das ein Paar V-förmig angebrachter Führungsrollen (1, 2) umfasst, nämlich eine erste Rolle (1) und eine zweite Rolle (2), die dazu bestimmt sind, sich auf einer ersten Lauffläche (7A) bzw. einer zweiten Lauffläche (7B) der Führungsschiene (3) abzustützen, wobei sich die erste und die zweite Lauffläche (7A, 7B) beiderseits einer Längsmittelebene (M) der Führungsschiene (3) befinden, wobei jede der Rollen mit einem Ansatz (10) versehen ist, wobei diese Ansätze ermöglichen, die Führungsschiene frei zu umschließen, wobei die Führungsschiene **dadurch gekennzeichnet ist, dass** sie zwischen der ersten und der zweiten Lauffläche (7A, 7B) ein Profilteil (72) mit einer Höhe h > 0 umfasst, das sich auf der Führungsschiene (3) in Längsrichtung erstreckt, wobei dieses Profilteil für eine Führung des Führungsorgans bei einer Entgleisung oder einem Führungsverlust des Führungsorgans geeignet ist, indem es in der Lage ist, den Ansatz (10) der ersten Rolle (1) auf der Seite der Mittelebene (M) zu halten, welche die Lauffläche (7A) der ersten Rolle (1) umfasst, und den Ansatz (10) der zweiten Rolle (2) auf der Seite der Mittelebene (M), welche die Lauffläche (7B) der zweiten Rolle (2) umfasst.

5. Führungsschiene (3) nach Anspruch 4, **dadurch gekennzeichnet, dass** die Geometrie des Querschnitts des Profilteils (72) geeignet ist, bei einer Entgleisung oder einem Führungsverlust den Ansatz (10) der einen oder der anderen der Rollen (1, 2) zu zwingen, sich auf der Führungsschiene (3) an einer dritten bzw. einer vierten Lauffläche (7C, 7D) abzustützen, die auf der einen bzw. der anderen Seite der Mittelebene (M) positioniert sind und jeweils durch eine Seite des Profilteils (72) begrenzt werden.

6. Führungsschiene (3) nach Anspruch 4 oder 5, **dadurch gekennzeichnet, dass** für wenigstens ein Längsende des Profilteils (72) die Höhe h dieses Profilteils auf einer Länge X von einem minimalen Wert h ≅ 0 am Ende des Profilteils (72) bis zu einem Nennwert h = h1, der größer als der minimale Wert ist, variiert.

7. Führungsschiene (3) nach Anspruch 6, **dadurch gekennzeichnet, dass** das Profilteil (72) einen Querschnitt aufweist, der eine Grundseite, die dazu bestimmt ist, auf der Führungsschiene (3) befestigt zu werden, zwei Seiten, die symmetrisch bezüglich der Mittelebene (M) sind und dazu bestimmt sind, den Ansatz der einen oder der anderen der Rollen zu zwingen, sich auf der Führungsschiene (3) abzustützen, und eine obere Seite umfasst.

8. Führungsschiene (3) nach Anspruch 6, **dadurch gekennzeichnet, dass** der Querschnitt die Form eines gleichschenkligen Trapezes aufweist, wobei die kleine Grundseite dieses gleichschenkligen Trapezes dazu bestimmt ist, an der Führungsschiene (3) befestigt zu werden.

9. Führungsschiene (3) nach einem der Ansprüche 4 bis 8, **dadurch gekennzeichnet, dass** das Profilteil (72) an die Führungsschiene (3) angeschweißt ist.

10. Führungsschiene (3) nach einem der Ansprüche 4 bis 9, **dadurch gekennzeichnet, dass** das Profilteil (72) Befestigungslöcher umfasst, durch die es geeignet ist, an der Führungsschiene (3) durch ein Verschraubungssystem befestigt zu werden.

11. Führungsschiene (3) nach einem der Ansprüche 4 bis 8, **dadurch gekennzeichnet, dass** sie durch Walzen hergestellt wird.

12. Verfahren zum Schutz vor einem Führungsverlust eines geführten Fahrzeugs, das mit einem Führungsorgan ausgestattet ist, das ein Paar V-förmig angebrachter Führungsrollen (1, 2) umfasst, nämlich eine erste Rolle (1) und eine zweite Rolle (2), die dazu bestimmt sind, sich auf einer ersten bzw. einer zweiten Lauffläche (7A, 7B) einer Führungsschiene (3) abzustützen, die zur Führung des geführten Fahrzeugs dient, wobei sich die erste und die zweite Lauffläche (7A, 7B) beiderseits einer Längsmittelebene (M) der Führungsschiene (3) befinden, wobei jede der Rollen (1, 2) mit einem Ansatz (10) versehen ist, wobei diese Ansätze (10) ermöglichen, die Führungsschiene (3) frei zu umschließen, wobei das Verfahren zum Schutz eine Befestigung eines Profilteils (72) mit einer Höhe h > 0, das sich in Längsrichtung auf einem Teil der Führungsschiene (3) erstreckt, auf der Führungsschiene (3) zwischen der ersten und der zweiten Lauffläche (7A, 7B) umfasst, wobei dieses Profilteil (72) für eine Führung des Führungsorgans bei einer Entgleisung oder einem Führungsverlust des Führungsorgans geeignet ist, indem es in der Lage ist, den Ansatz (10) der ersten Rolle (1) auf der Seite der Mittelebene (M) zu halten, welche die Lauffläche (7A) der ersten Rolle (1) umfasst, und den Ansatz (10) der zweiten Rolle (2) auf der Seite der Mittelebene (M), welche die Lauffläche (7B) der zweiten Rolle (2) umfasst.

13. Verfahren zum Schutz nach Anspruch 12, **dadurch gekennzeichnet, dass** das Profilteil (72) durch Schweißen (73) auf der Führungsschiene (3) befestigt wird.

14. Verfahren zum Schutz nach Anspruch 12, **dadurch gekennzeichnet, dass** das Profilteil (72) durch ein Verschraubungssystem auf der Führungsschiene (3) befestigt wird.

15. Verfahren zum Schutz nach einem der Ansprüche 12 bis 14, wobei der Teil der Führungsschiene (3), auf welchem das Profilteil (72) befestigt wird, ausschließlich zu einem Kreuzungsbereich von Führungsschienen gehört.

## Claims

1. Device to protect against a loss of guidance of a guided vehicle equipped with a guidance unit including a pair of guide pulleys (1, 2) mounted in a V, respectively a first pulley (1) and a second pulley (2), intended to rest respectively on a first running surface (7A) and a second running surface (7B) of a guide rail (3), said first and said second running surface (7A, 7B) being positioned on each side of a median longitudinal plane (M) of said guide rail (3), each of the pulleys being provided with a flange (10), said flanges (10) making it possible freely to grip the guide rail (3), the protection device including:
- a section (72) with height h > 0 extending longitudinally, configured to be fixed along its length to at least a part of said guide rail (3), between said first and said second running surface (7A, 7B), said section (72) having a cross-section suitable for guiding the guidance unit during a derailment or loss of guidance of said guidance unit when said section (72) is fixed to said part of the guide rail (3), said cross-section having a geometry capable of holding the flange (10) of the first pulley (1) on the side of the median plane (M) comprising the running surface (7A) of said first pulley (1) and the flange (10) of the second pulley (2) on the side of the median plane (M) comprising the running surface (7B) of said second pulley (2);
- a means for fixing (73) said section to said guide rail (3) .

2. Protection device according to claim 1, **characterised in that**, for at least one end of said section (72), the height h of said section (72) varies over a length X from a minimum value h ≅ 0 at the end of said section (72) to a nominal value h = h1 greater than said minimum value.

3. Protection device according to one of claims 1 or 2, **characterised in that** said cross-section of said section (72) is in the shape of an isosceles trapezium, the small base of said isosceles trapezium being intended to be fixed to said guide rail.

4. Guide rail (3) suitable for the guidance of a guided vehicle equipped with a guidance unit including a pair of guide pulleys (1, 2) mounted in a V, respectively a first pulley (1) and a second pulley (2), intended to rest respectively on a first running surface (7A) and a second running surface (7B) of said guide rail (3), said first and said second running surface (7A, 7B) being positioned on each side of the median longitudinal plane (M) of said guide rail (3), each of the pulleys being provided with a flange (10), said flanges (10) making it possible freely to grip the guide rail, said guide rail being **characterised in that** it includes, between said first and said second running surface (7A, 7B) a section (72) with height h > 0 extending longitudinally over the guide rail (3), said section being suitable for guiding the guidance unit during a derailment or loss of guidance of said guidance unit, while being capable of holding the flange (10) of the first pulley (1) on the side of the median plane (M) comprising the running surface (7A) of said first pulley (1) and the flange (10) of the second pulley (2) on the side of the median plane (M) comprising the running surface (7B) of said second pulley (2).

5. Guide rail (3) according to claim 4, **characterised in that** the geometry of the cross-section of the section (72) is capable, during said derailment or loss of guidance, of causing the flange (10) of one or other of said pulleys (1, 2) to rest on the guide rail (3) against a third or respectively fourth running surface (7C, 7D) positioned respectively on each side of said median plane (M) and each delimited by one side of said section (72).

6. Guide rail (3) according to claim 4 or 5, **characterised in that**, for at least one longitudinal end of said section (72), the height h of said section varies over a length X from a minimum value h ≅ 0 at the end of said section (72) to a nominal value h = h1 greater than said minimum value.

7. Guide rail (3) according to claim 6, **characterised in that** said section (72) has a cross-section including a base intended to be fixed on said guide rail (3), two sides symmetrical with respect to said median plane (M) and intended to cause the flange of one or other of said pulleys to rest on the guide rail (3) and an upper side.

8. Guide rail (3) according to claim 6, **characterised in that** said cross-section is in the shape of an isosceles trapezium, the small base of said isosceles trapezium being intended to be fixed to said guide rail (3).

9. Guide rail (3) according to one of claims 4 to 8 **characterised in that** said section (72) is welded to said guide rail (3).

10. Guide rail (3) according to one of claims 4 to 9, **characterised in that** the section (72) includes fixing holes making it suitable for being fixed to the guide rail (3) by means of a system of bolts.

11. Guide rail (3) according to one of claims 4 to 8, **characterised in that** it is produced by rolling.

12. Method to protect against a loss of guidance of a guided vehicle equipped with a guidance unit including a pair of guide pulleys (1, 2) mounted in a V, respectively a first pulley (1) and a second pulley (2), intended to rest respectively on a first and a second running surface (7A, 7B) of a guide rail (3), said first and said second running surface (7A, 7B) being positioned on each side of a median longitudinal plane (M) of said guide rail (3), each of the pulleys (1, 2) being provided with a flange (10), said flanges (10) making it possible freely to grip the guide rail (3), said method of protection including fixing on said guide rail (3), between said first and said second running surface (7A, 7B) of a section (72) with height h > 0 extending longitudinally over a part of said guide rail (3), said section (72) being suitable for guiding the guidance unit during a derailment or loss of guidance of said guidance unit, while being capable of holding the flange (10) of the first pulley (1) on the side of the median plane (M) comprising the running surface (7A) of said first pulley (1) and the flange (10) of the second pulley (2) on the side of the median plane (M) comprising the running surface (7B) of said second pulley (2).

13. Protection method according to claim 12, **characterised in that** said section (72) is fixed by welding (73) on said guide rail (3).

14. Protection method according to claim 12, **characterised in that** said section (72) is fixed by a system of bolts on said guide rail (3).

15. Protection method according to one of claims 12 to 14, according to which the part of said guide rail (3) on which said section (72) is fixed belongs solely to a zone of intersection of guide rails.
